# EUROPEAN PATENT APPLICATION

(11) **EP 4 520 439 A1**
(43) Date of publication of application: **12.03.2025**
(21) Application number: 22940528.7
(22) Date of filing: 02.05.2022
(51) Int. Cl.: B03D 1/00, B03D 1/001, B03D 1/018, B03B 7/00

(54) **GLOBAL PROCESS FOR OBTAINING LITHIUM SULFATE MONOHYDRATE ORE WITH LOW CONTENTS OF IMPURITIES ASSOCIATED WITH CHLORINE AND MAGNESIUM**

(71) Applicant: Sociedad Quimica y Minera de Chile, S.A., Las Condes, Santiago (CL)
(72) Inventor: YAÑEZ SAEZ, Osvaldo, 4285 Santiago (CL)
(74) Representative: ETL IP Patent- und Rechtsanwaltsgesellschaft mbH
(86) International application number: PCT/CL2022/050047
(87) International publication number: WO 2023/212832

(57) **Abstract**

This patent application refers to a global process to obtain lithium sulfate monohydrate ore with low contents of impurities associated to chlorine and magnesium; in particular, the process consists of the concentration, through grinding, flotation, leaching and filtration stages, of the lithium sulfate present in potassium Carnallite (KCl*MgCl₂*6H₂O) stockpiles with high contents of lithium sulfate (Li₂SO₄*H₂0) and sodium chloride (NaCl). The greatest advantage of the invention's process is that it uses salts and brines which are not currently being processed today and which have already been extracted for potassium production.

## Description

### PRIOR ART

For years, high sulfate brine has only served as a potassium producer, and the Lithium content has been returned to the salt flat through reinjection. This means that not all the extracted brine produces Lithium, even though it also has an important composition of this ion. Currently, practically all the brine extracted from the salt flat produces Potassium.

Lithium production in the salt flat contemplates 2 deposits, one where the predominant anion is Chlorine and another one that has a large amount of Sulfate. This difference is important because the production and/or refining process changes depending on the raw material.

Given the above, the processes that exist in the prior art are mainly focused on processes to produce lithium carbonate (Li₂CO₃) and, to a lesser extent, lithium hydroxide (LiOH*H₂0), from the first deposit; this is based on Chlorine and uses very little Sulfate. However, a technically and financially viable alternative of processing high Sulfate brines was not available, until now.

In the prior art, it is possible to find varied information for obtaining lithium salts. However, all of such information is significantly different from the process of the invention.

Chinese patent publication CN102921553 (A) describes a method for the flotation of Lithium Potassium Sulfate in a mixture with Sodium Chloride. The product floated in this application is Lithium Sulfate, which is a mineral species different from Lithium Potassium Sulfate. Furthermore, in this application, Lithium Sulfate is originally mixed with a number of minerals besides Sodium Chloride, such as Carnallite (hydrated Potassium Magnesium Chloride), Bischofite (hydrated Magnesium Chloride) and other contaminants which are also present, making the process more complex.

Chinese patent publication CN101318670 (A) describes a production process for extracting Lithium Chloride salt from a salt mixture containing Lithium Chloride salt and Bischofite (hydrated Magnesium Chloride) produced from brine that is evaporated in evaporation ponds. Although in both processes the mixture of salts before flotation is obtained by evaporation of brines in evaporation ponds, the salts obtained are different both in terms of the salt to be floated, since in the case of this application the salt is Lithium Sulfate and that of patent CN101318670 is Lithium Chloride, and in terms of the salts present in the mixture, since in addition to Bischofite, in this application, Sodium Chloride, Carnallite (Potassium Chloride and hydrated Magnesium Chloride) and other contaminants are also present.

Chinese patent publication CN109174438 (A) describes a classification process of spodumene ore beneficiation and belongs to the technical field of multi-metal beneficiation. Although spodumene flotation can be part of a process that generates Lithium Sulfate as an intermediate product, spodumene is a lithium aluminosilicate derived from a mixture of rocks and not from brines, which makes the raw material to be floated completely different from the one used in this application.

Thus, it is possible to assert that this invention solves a problem for which no solution previously existed, since it manages to concentrate lithium sulfate monohydrate with low contents of impurities associated to chlorine and magnesium from brines which used to be financially unattractive for purposes of exploiting the same for the production of lithium. Put in other words, the process of the invention has the great advantage of using salts and brines that are not currently being processed today and that were already extracted for potassium production.

### DETAILED DESCRIPTION OF THE INVENTION

The process to obtain lithium sulfate monohydrate ore with low impurity contents associated with chlorine and (Li₂SO₄*H₂0) magnesium involves 3 main stages: grinding, flotation and leaching.

The process begins with the feeding of potassium carnallite salts with high SO₄ concentration to a comminution stage, specifically grinding. The purpose of this is to reduce its size and release the lithium sulfate present in the mineral.
This material enters a rougher flotation stage, which aims to recover as much material of interest as possible, prioritizing recovery over ore grade. The generated concentrate enters a cleaner flotation stage, which aims to increase the grade of the concentrate to the required purity, to be fed to a leaching stage with hot water at 80°C, thus increasing the grade of the product. The leached solid enters a washing stage, in order to displace the impregnation, reaching a Li₂SO₄*H₂O grade of over 90%.

The selective concentration stage favors the grade of the mineral of interest over the recovery. The tailings generated in the cleaner flotation or cleaning stage are recirculated to the rougher flotation in order to recover the material that was not floated in the circuit. The Rougher tailings that are generated enter a second recuperative stage, which consists of a Scavenger flotation, the purpose of which is to increase the overall recovery of the flotation circuit, recovering the mineral that could not be floated in the previous stage, and obtaining tailings exhausted in lithium sulfate with a grade of 0.2% Li. The concentrate obtained is characterized by being of low grade, so it can be recirculated to the Rougher Flotation.

The range of Lithium Sulfate feed that has been validated is in the order of 4-30% Lithium Sulfate monohydrate, with 50-70% of potassium Carnallite, 8-17% of sodium chloride; in some cases bischofite (MgCl₂*6H₂O) can be found in ranges of 4-20%, the remaining being mainly impurities associated with boron (1-2%) and calcium (0.1-0.2%).

The grinding of the material is carried out in a collapse crusher and cage mill, with the objective of releasing the lithium sulfate crystals present in the potassium carnallite matrix and preparing them for flotation. To avoid overstressing the mill, previously saturated and balanced brine is added to the mill shells, thus removing possible solids embedded therein.

After the grinding stage, the salt comes into contact with the brine previously saturated and balanced with the same salt, thereby generating a pulp with a high percentage of solids (40-50%), where 50% of flotation reagent (amine collector) is added to prepare the material for the flotation stage and thus pump the pulp to the Rougher flotation cells.

The recirculation flow of the tailings from the cleaner flotation stage and Scavenger concentrate are added to the rougher flotation cell; these flows have a low percentage of solids. As a result, a pulp of approximately 30-35% solids is generated as feed to the Rougher flotation, and the remaining 30% of the collector and frothier is added to the cell.

The Rougher flotation operates in a recuperative way, obtaining lithium sulfate monohydrate concentrates above 50%. The Rougher flotation tailings, with low lithium sulfate monohydrate content, go through a classification and regrinding stage in cage mills.

The reground and small size material from the classification is pooled together to become the feed to the Scavenger flotation stage, together with the remaining percentage of collector and frother, the objective of which is to generate plant tailings with the lowest levels of lithium sulfate, with the cell working in a recuperative way.

On the other hand, the rougher concentrate obtained is taken to the cleaning stage (Cleaner), where it must be concentrated to levels of 85% lithium Sulfate, working the cells selectively to increase the height of the cushion. Given that this is a selective flotation, the tailings of this phase are recirculated to the rougher flotation mentioned above in order to avoid losses.

The Cleaner concentrate is sent to a filtration stage, where a pile with a high content of lithium sulfate <85% is obtained, and it is there where the pile is washed with sprinklers using hot water, the objective of which is to solubilize the impurities associated with chlorine and increase the grade of the product, thus obtaining grades higher than 90%.

Subsequently, we proceed to the leaching stage, where filtered salt and water are added at ratio of 0.3 water/solid. After filtration, it is possible to wash the resulting concentrate, adding water at a ratio of 0.14 water/solid to remove the remaining impurities and impregnation, thus increasing the product grade to over 95% purity.

Upon completion of the whole process, the following results are achieved:
The proposed lithium sulfate monohydrate concentrate production process yields the following mass balance detailed in Table 1.

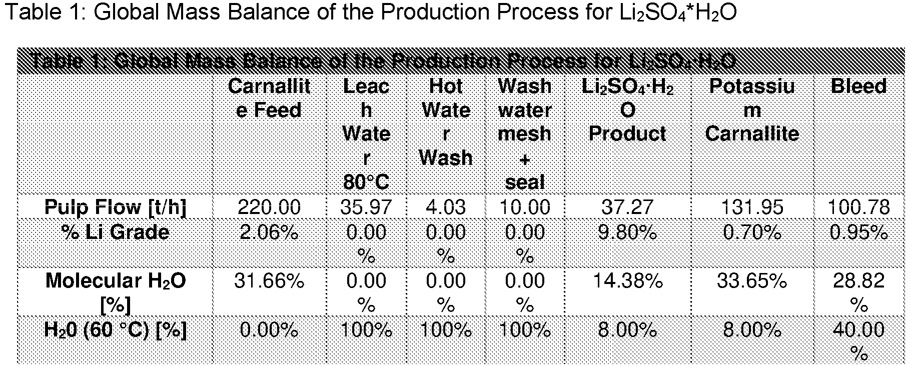

### EXAMPLE

Tests were conducted at a laboratory scale, where the lithium sulfate concentration process was used and validated, via flotation, grinding and leaching, using the 5-liter Denver flotation cell.
The Lithium Sulfate feeder range that has been validated at a laboratory scale is of the order of 4-30% monohydrated Lithium Sulfate, with 50-70% of potassium Carnallite, 8-17% sodium chloride, in some cases bischofite (MgCl₂*6H₂O) is present in ranges of 5-2%, with the remainder being mainly impurities associated to boron (1-2%) and calcium (0.1-0.2%). After the grinding, the homogeneous loads of the milled material are generated, in accordance with the cell's capacity.

It is relevant to highlight that, because we are dealing with salts, it is necessary to create a brine that is saturated and at balance with this salt, in order to avoid dissolutions and/or precipitations of undesired varieties.

Regarding the Rougher flotation, a pulp is formed with 50% of solids, which is conditioned during 10 minutes by shaking it in the flotation cell with the flotation reagents (amine collector and frothier). Once this conditioning time has expired, the remaining brine is added in order to achieve the percentage of solids sought for the stage; in this case, the process works at 31% of solids, the air is released, and the parameters are adjusted as indicated above.

When the first drop of the concentrate falls onto the tray, the flotation time begins. For the Rougher flotation, this time was set at 7 minutes. The concentrate is padded every 15 seconds and the brine is repositioned in order to maintain the cell's level via a peristaltic pump.

Once the flotation time has ended, the air valve is closed and the shaking is halted, the obtained flows are kneaded and filtered, in order to obtain the solid product and tailings, which must also be kneaded in order to generate a new pulp to feed the Cleaner flotation.

In the Cleaner flotation, the same 5-liter cell is used and the procedure is repeated, conditioning during 10 minutes at 50% of solids, adding collector and the frothier and, once the conditioning has concluded, it is refilled until completing 20% of feeding solids and the air is released. Justas in the Rougher flotation, the flotation time begins once the first drop of concentrate falls through the cell's wall. The time set for this flotation is 10 minutes. The obtained concentrate material is then filtrated and disposed of for the leaching stage.

For the leaching stage, a container is used, where the already filtered salt is added along with the water, at a ratio of 0.3 water/salid, then shaken with a mechanical shaker during 15 minutes and subsequently filtered. After the filtering, it is possible to wash the concentrate formed in the funnel, adding water at a ratio of 0.14 water/solid in order to displace the remaining impurities and impregnation, thus increasing the product's grade at over 95% purity.

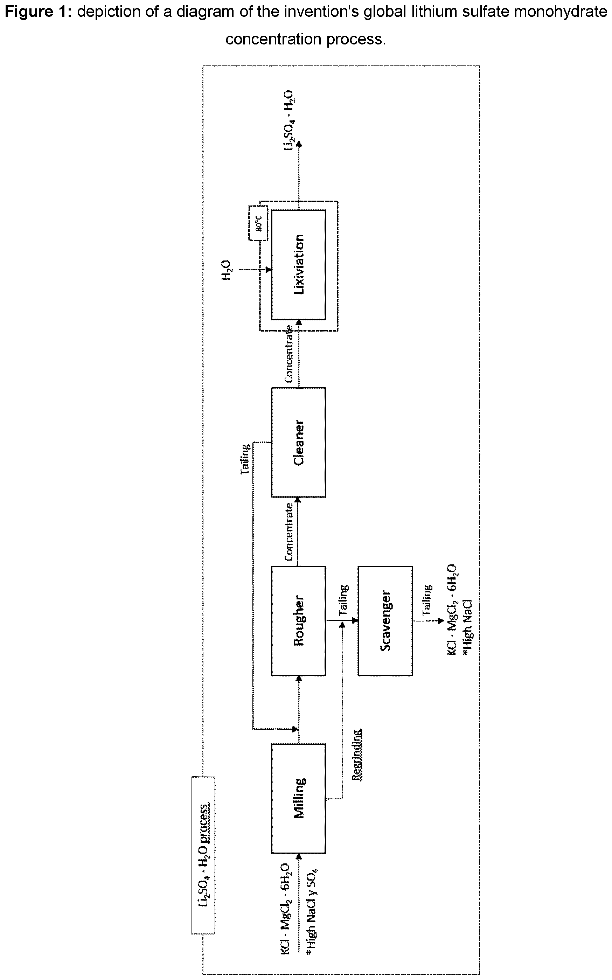

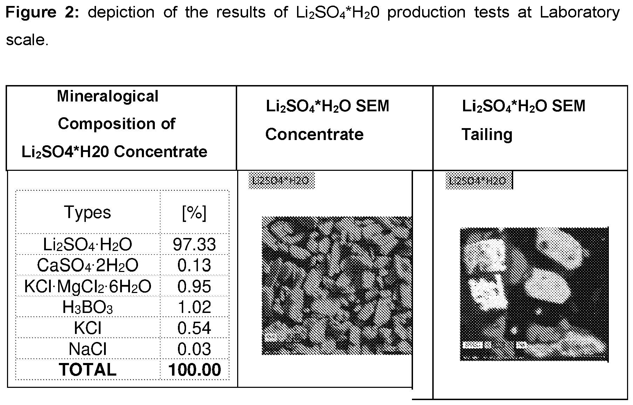

## Claims

1. Process to obtain lithium sulfate monohydrate ore with low contents of impurities associated to chlorine and magnesium, from brines which were not financially attractive, in order to exploit them for the production of Lithium, **CHARACTERIZED by** comprising three main stages; grinding, flotation, and leaching; where, in order to carry out the first stage, potassium carnallite salts with a high concentration of SO4 are fed to a comminution stage, specifically grinding, in order to reduce their size and release the lithium sulfate present in the ore; in which the material obtained from the grinding is subjected to a Rougher flotation stage, the purpose of which is to recover the highest quantity of material of interest as possible, favoring recovery over the mineral's grade; where the concentrate that is generated in the Rougher flotation stage enters a Cleaner flotation stage or a cleaning stage, in which a concentrate with the required purity is obtained, in order to be fed to a leaching stage; in which the concentrate obtained in said Cleaner flotation or cleaning stage is subjected to a leaching stage, where said concentrate from the Cleaner flotation or cleaning stage is added along with water, at a ratio of 0.3 water/solid.

2. The process to obtain lithium sulfate monohydrate ore with low contents of impurities in accordance with claim 1, **CHARACTERIZED in that** after said filtering stage, it includes subjecting the resulting concentrate to washing, adding water at a ratio of 0.14 water/solid in order to displace the remaining impurities and impregnation, increasing the grade of the lithium sulfate monohydrate concentrate to over 95% purity.

3. The process to obtain lithium sulfate monohydrate ore with low contents of impurities in accordance with claim 1, **CHARACTERIZED in that** tailings are generated in said Cleaner flotation, which are recirculated to said Rougher flotation, in order to recover the material that was not floated in the circuit; in which said Rougher flotation generates tailings that are inserted into a second recuperative stage, which consists of a Scavenger flotation, the purpose of which is to increase the overall recovery of the flotation circuit, recovering the material which could not float during the previous stage, obtaining tailings exhausted in lithium sulfate with a grade of 0.2% Li.

4. The process to obtain lithium sulfate monohydrate ore with low contents of impurities in accordance with claim 1, **CHARACTERIZED in that** said grinding of the material is carried out in a collapse crusher and cage mills, with the objective of releasing the lithium sulfate crystals present in said potassium carnallite matrix and preparing them for said Rougher flotation.

5. The process to obtain lithium sulfate monohydrate ore with low contents of impurities in accordance with claim 4, **CHARACTERIZED in that** a previously saturated and balanced brine is added to the mill shells of the cage mill, removing possible solids embedded therein.

6. The process to obtain lithium sulfate monohydrate ore with low contents of impurities in accordance with claim 1, **CHARACTERIZED in that** after said grinding stage, said salts come into contact with a brine previously saturated and balanced with the same salts, generating a pulp with a high percentage of solids (40-50%), where 50% of flotation reagent (amine collector) is added to condition the obtained material.

7. The process to obtain lithium sulfate monohydrate ore with low contents of impurities in accordance with claim 1, **CHARACTERIZED in that** the recirculation flow of the tailings from the Cleaner flotation stage and Scavenger flotation concentrate are added to the Rougher flotation, thus generating a pulp of approximately 30-35% solids to feed the Rougher flotation, and further in that the remaining 30% of the collector and frothier is added to a cell where said Rougher flotation is carried out.

8. The process to obtain lithium sulfate monohydrate ore with low contents of impurities in accordance with claim 1, **CHARACTERIZED in that** said Rougher flotation operates in a recuperative way, obtaining lithium sulfate monohydrates above 50%, in which the Rougher flotation tailings, with low sulfate monohydrate contents, go through a classification and regrinding stage in cage mills.

9. The process to obtain lithium sulfate monohydrate ore with low contents of impurities in accordance with claim 8, **CHARACTERIZED in that** the reground and small size material extracted from said classification is pooled together to become the feed to the Scavenger flotation stage, along with the remaining percentage of collector and
frothier, where plant tailings are generated with the lowest levels of lithium sulfate.

10. The process to obtain lithium sulfate monohydrate ore with low contents of impurities in accordance with claim 1, **CHARACTERIZED in that** the obtained Rougher concentrate, which is subjected to said Cleaner flotation stage, is concentrated to levels of 85% lithium Sulfate.

11. The process to obtain lithium sulfate monohydrate ore with low contents of impurities in accordance with claim 8, **CHARACTERIZED in that** the material obtained from the cleaner flotation stage is subjected to a filtration stage, where a pile with a high content of lithium sulfate <85% is obtained.
